# EUROPEAN PATENT APPLICATION

(11) **EP 4 672 582 A1**
(43) Date of publication of application: **31.12.2025**
(21) Application number: 25185921.1
(22) Date of filing: 27.06.2025
(51) Int. Cl.: H02M 1/32, H02M 3/00

(54) **RESONANT CONVERTER, METHOD FOR CONTROLLING RESONANT CONVERTER, AND RELATED DEVICE**

(30) Priority: 27.06.2024 CN 202410852309; 14.11.2024 CN 202411629949
(71) Applicant: Sungrow Charging Technology Co., Ltd., Hefei, Anhui 230088 (CN)
(72) Inventor: LI, Laibao, Anhui, 230088 (CN); PENG, Xuanzhe, Anhui, 230088 (CN); ZHANG, Peng, Anhui, 230088 (CN)
(74) Representative: Rooney, John-Paul

(57) **Abstract**

A resonant converter, a method for controlling a resonant converter, and a related apparatus are provided. The resonant converter includes: a first resonant conversion circuit, a second resonant conversion circuit, a switching module, a discharging circuit, and a controller. The controller outputs a first control signal to the discharging circuit in a case that a load characteristic of the resonant converter is a purely resistive characteristic; and outputs a second control signal to the discharging circuit in a case that the load characteristic of the resonant converter is a capacitance-voltage characteristic. The first control signal is configured for closing the discharging circuit, and the second control signal is configured for opening the discharging circuit.

## Description

### FIELD

The present disclosure relates to the technical field of power electronics, and in particular to a resonant converter, a method for controlling a resonant converter, and a related device.

### BACKGROUND

A resonant converter is a resonant circuit composed of an inductor and a capacitor to implement resonance at a specific frequency, thereby implementing electric energy conversion and control. However, after the resonant converter stops operating, the capacitor in the resonant converter still stores voltage. In order to ensure the safety of an output part of an electronic device, voltage stored on the capacitor in the resonant converter is discharged after the resonant converter stops operating, to prevent the voltage stored on the capacitor from damaging the electronic device or impacting on personal safety.

Currently, a discharging circuit is arranged at an output end of a resonant converter to discharge voltage stored on a capacitor in the resonant converter. However, current discharging circuits have a high damage rate.

### SUMMARY

Based on the above issue, a resonant converter, a method for controlling a resonant converter, and a related device are provided according to the present disclosure, and are intended to address the issue of a high damage rate of a discharging circuit.

The following technical solutions are provided according to embodiments of the present disclosure.

In a first aspect, a resonant converter is provided according to an embodiment of the present disclosure, and includes: a first resonant conversion circuit, a second resonant conversion circuit, a switching module, a discharging circuit, and a controller, where a positive electrode of the first resonant conversion circuit is connected to a first terminal of the discharging circuit, a negative electrode of the second resonant conversion circuit is connected to a second terminal of the discharging circuit, and the first resonant conversion circuit is connected to the second resonant conversion circuit through the switching module, the positive electrode of the first resonant conversion circuit is configured as a positive output terminal of the resonant converter, and the negative electrode of the second resonant conversion circuit is configured as a negative output terminal of the resonant converter.

The controller is configured to output a first control signal to the discharging circuit in a case that a load characteristic of the resonant converter is a purely resistive characteristic; and output a second control signal to the discharging circuit in a case that the load characteristic of the resonant converter is a capacitance-voltage characteristic, where the first control signal is configured for closing the discharging circuit, and the second control signal is configured for opening the discharging circuit.

In an embodiment, the controller is further configured to: obtain an output voltage variation trend of the resonant converter, where the output voltage variation trend is obtained based on multiple output voltages; the multiple output voltages are obtained by periodically acquiring a voltage at an output end of the resonant converter; and the output voltage variation trend is used to determine the load characteristic of the resonant converter.

In an embodiment, the controller is further configured to: obtain an equivalent capacitance value and an actual capacitance value corresponding to the resonant converter, where the actual capacitance value is obtained based on an average variation rate of multiple output voltages; the multiple output voltages are obtained by periodically acquiring a voltage at an output end of the resonant converter; and the load characteristic of the resonant converter is obtained based on the equivalent capacitance value and the actual capacitance value.

In an embodiment, the discharging circuit includes a variable discharging resistor, and the first control signal is configured for controlling the variable discharging resistor in the discharging circuit to have a first resistance value.

The controller is further configured to output a third control signal, in a case that an output voltage of the resonant converter is less than or equal to a first voltage or a discharging duration of the discharging circuit is greater than a first duration, where the third control signal is configured for controlling the variable discharging resistor in the discharging circuit to have a second resistance value, and the second resistance value is less than the first resistance value.

In an embodiment, the controller is further configured to output a fourth control signal, in a case that the output voltage of the resonant converter is less than or equal to a second voltage or the discharging duration is greater than a second duration, where the fourth control signal is configured for opening the discharging circuit, and the second voltage is less than the first voltage.

In an embodiment, after the discharging circuit is closed, the controller is further configured to output a fifth control signal, in a case that an output voltage of the resonant converter is less than or equal to a third voltage or a discharging duration of the discharging circuit is greater than a third duration, where the fifth control signal is configured for opening the discharging circuit, the third duration is a preset discharging duration.

In an embodiment, the discharging circuit includes a first switching device and a discharging resistor, and the first switching device is connected in series with the discharging resistor to form a branch, and the branch is connected between the positive output terminal and the negative output terminal of the resonant converter.

In a second aspect, a method for controlling a resonant converter is provided according to an embodiment of the present disclosure.

The method includes:
outputting a first control signal to the discharging circuit in a case that a load characteristic of the resonant converter is a purely resistive characteristic, where the first control signal is configured for closing the discharging circuit; and
outputting a second control signal to the discharging circuit in a case that the load characteristic of the resonant converter is a capacitance-voltage characteristic, where the second control signal is configured for opening the discharging circuit.

In an embodiment, the method further includes obtaining an output voltage variation trend of the resonant converter, where the output voltage variation trend is obtained based on multiple output voltages; the multiple output voltages are obtained by closing the discharging circuit and periodically acquiring a voltage at an output end of the resonant converter; and the output voltage variation trend is for determining the load characteristic of the resonant converter.

In an embodiment, the method further includes: obtaining an equivalent capacitance value and an actual capacitance value corresponding to the resonant converter, where the actual capacitance value is obtained based on an average variation rate of the multiple output voltages; the multiple output voltages are obtained by closing the discharging circuit and periodically acquiring a voltage at an output end of the resonant converter; and the load characteristic of the resonant converter is obtained based on the equivalent capacitance value and the actual capacitance value.

In an embodiment, the discharging circuit includes a variable discharging resistor. The first control signal is configured for controlling the variable discharging resistor in the discharging circuit to have a first resistance value.

The method further includes:
outputting a third control signal, in a case that an output voltage of the resonant converter is less than or equal to a first voltage or a discharging duration of the discharging circuit is greater than a first duration, where the third control signal is configured for controlling the variable discharging resistor in the discharging circuit to have a second resistance value, and the second resistance value is less than the first resistance value.

In an embodiment, the method further includes:
outputting a fourth control signal, in a case that the output voltage of the resonant converter is less than or equal to a second voltage or the discharging duration is greater than a second duration,
where the fourth control signal is configured for opening the discharging circuit, the second voltage is less than the first voltage, and a sum of the first duration and the second duration is equal to the preset discharging duration.

In an embodiment, after the discharging circuit is turned on, the method further includes: outputting a fifth control signal, in a case that an output voltage of the resonant converter is less than or equal to a third voltage or a discharging duration of the discharging circuit is greater than a third duration, where the fifth control signal is configured for opening the discharging circuit, and the third duration is the preset discharging duration.

In a third aspect, an inverter is provided according to an embodiment of the present disclosure. The inverter includes the resonant converter as described in the first aspect.

In a fourth aspect, a photovoltaic system is provided according to an embodiment of the present disclosure. The photovoltaic system includes a controller and the inverter as described in the third aspect.

In a fifth aspect, a control apparatus is provided according to an embodiment of the present disclosure. The control apparatus includes a processor and a memory, where the processor is connected to the memory, the memory is configured to store programs, instructions, or codes, and the processor is configured to execute the programs, instructions, or codes in the memory to perform the method for controlling a resonant converter as described in the second aspect.

In a sixth aspect, a computer-readable storage medium is provided according to an embodiment of the present disclosure. The computer-readable storage medium stores a computer program, and the computer program is loaded by a processor to perform the method for controlling a resonant converter according to the second aspect.

The resonant converter according to the present disclosure includes the first resonant conversion circuit, the second resonant conversion circuit, the switching module, the discharging circuit, and the controller. The controller acquires the load characteristic of the resonant converter, and closes the discharging circuit in a case that the load characteristic is the purely resistive characteristic or opens the discharging circuit in a case that the load characteristic is the capacitance-voltage characteristic. Based on the load characteristic of the resonant converter, it is determined whether to discharge, through the discharging circuit, the residual voltage on a capacitor in the resonant converter, which can address an issue of damage to the discharging circuit due to the capacitance-voltage characteristic, thus reducing the damage rate of the discharging circuit.

### BRIEF DESCRIPTION OF THE DRAWINGS

In order to more clearly illustrate technical solutions in embodiments of the present disclosure or in the conventional technology, the drawings to be used in the description of the embodiments or the conventional technology are briefly described below. Apparently, the drawings in the following description show only some embodiments of the present disclosure, and other drawings may be obtained by those skilled in the art from the drawings without any creative work.
FIG. 1 is a schematic structural diagram of a resonant converter according to an embodiment of the present disclosure;
FIG. 2a is a schematic diagram of variation in a discharging current under a purely resistive characteristic according to an embodiment of the present disclosure;
FIG. 2b is a schematic diagram of variation of a discharging current under a capacitance-voltage characteristic according to an embodiment of the present disclosure;
FIG. 3 is a schematic structural diagram of a resonant converter according to another embodiment of the present disclosure;
FIG. 4 is a schematic structural diagram of a resonant converter according to another embodiment of the present disclosure;
FIG. 5 is a schematic structural diagram of a resonant converter according to another embodiment of the present disclosure;
FIG. 6 is a schematic structural diagram of a discharging circuit according to an embodiment of the present disclosure;
FIG. 7 is a schematic structural diagram of a resonant converter according to another embodiment of the present disclosure;
FIG. 8a is a schematic diagram of a curve of a residual voltage variation in a discharging process according to an embodiment of the present disclosure;
FIG 8b is a schematic diagram of a curve of a current variation of a switching device in a discharging process according to an embodiment of the present disclosure;
FIG. 9 is a flowchart of a method for controlling a resonant converter according to an embodiment of the present disclosure; and
FIG. 10 is a schematic structural diagram of a control apparatus according to an embodiment of the present disclosure.

### DETAILED DESCRIPTION

Currently, in order to ensure the safety of an output part of an electronic device, voltage stored on a capacitor in the electronic device is discharged after the electronic device stops operating, so as to prevent the voltage stored on the capacitor from damaging the electronic device or impacting on personal safety.

In a related art, the voltage stored on the capacitor in the circuit of the electronic device is discharged generally by using a discharging circuit. However, when a load characteristic of the circuit is a capacitance-voltage characteristic, that is, when the voltage of the circuit is constant, closing of the discharging circuit does not discharge the voltage, which may result in a risk of damaging the discharging circuit.

As an example, the electronic device is a power unit of a charging pile. When the power unit is a bi-directional charging power module, the bi-directional charging power module is not provided with an anti-reverse diode, and the discharging circuit may be damaged when the load characteristic is the capacitance-voltage characteristic. When the power unit is a uni-directional charging power module, the uni-directional charging power module is provided with an anti-reverse diode, and the discharging circuit may still be damaged when the anti-reverse diode is damaged. The anti-reverse diode is mainly configured to protect the circuit from being damaged by a reverse current.

In view of the above technical issues, a resonant converter, a method for controlling a resonant converter, and a related apparatus are provided according to the present disclosure. The resonant converter includes a first resonant conversion circuit, a second resonant conversion circuit, a switching module, a discharging circuit, and a controller. The controller acquires a load characteristic of the resonant converter, and closes the discharging circuit when the load characteristic is a purely resistive characteristic or opens the discharging circuit when the load characteristic is a capacitance-voltage characteristic.

In this way, the load characteristic of the resonant converter is determined, and whether the residual voltage on the capacitor in the resonant converter can be discharged through the discharging circuit is further determined based on the load characteristic. On the one hand, an anti-reverse diode is not provided, thus reducing the cost, and on the other hand, a problem of damage to the discharging circuit due to the capacitance-voltage characteristic can be avoided, thus reducing a damage rate of the discharging circuit.

In order to enable those skilled in the art to better understand the technical solution according to the present disclosure, the technical solutions according to the embodiments of the present disclosure are described clearly and completely hereinafter with reference to the drawings in the embodiments of the present disclosure. Apparently, the described embodiments are only part of the embodiments according to the present disclosure, rather than all of the embodiments. Based on the embodiments of the present disclosure, all other embodiments obtained by those skilled in the art without any creative work fall into the protection scope of the present disclosure.

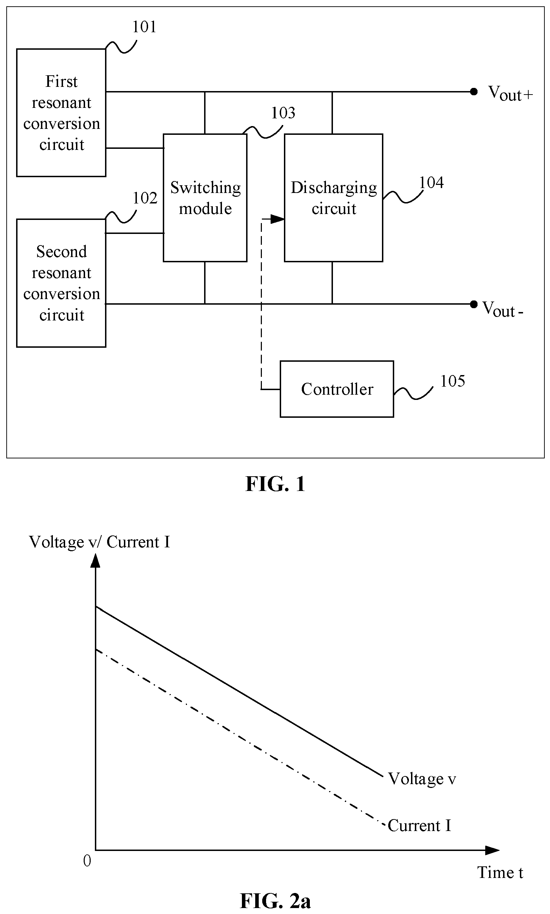

Reference is made to FIG. 1, which is a schematic structural diagram of a resonant converter according to an embodiment of the present disclosure.

As shown in FIG. 1, the resonant converter according to the embodiment of the present disclosure includes: a first resonant conversion circuit 101, a second resonant conversion circuit 102, a switching module 103, a discharging circuit 104, and a controller 105, where a positive electrode of the first resonant conversion circuit 101 is connected to a first terminal of the discharging circuit 104, a negative electrode of the second resonant conversion circuit 102 is connected to a second terminal of the discharging circuit 104, and the first resonant conversion circuit 101 is connected to the second resonant conversion circuit 102 through the switching module 103, the positive electrode of the first resonant conversion circuit 101 is configured as a positive output terminal of the resonant converter, and the negative electrode of the second resonant conversion circuit 102 is configured as a negative output terminal of the resonant converter.

A resonant conversion circuit, also known as a resonant circuit, is a circuit composed of two components, an inductor and a capacitor, which may be connected in series or in parallel. In the resonant conversion circuit, variation trends in current and voltage are constantly converted to each other and remain synchronized at a specific frequency, and meanwhile the inductor and the capacitor also conduct alternate energy storage and release. The essence of the resonant circuit is that the electric-field energy in the capacitor and the magnetic-field energy in the inductor are converted to each other, one increases and the other decreases, and they fully compensate each other. In a resonance state, a sum of the electric-field energy and the magnetic-field energy remains constant at all times, and the power supply only supplies energy to resistors that consume electric energy in the circuit. The resonant conversion circuit is widely used in, including but not limited to, the field of radio communication, the field of power electronics, and the like. In the embodiment of the present disclosure, the resonant conversion circuit is applied to a power module of a direct current charging pile.

The switching module refers to a module for implementing switching functions and to establish various connections between the first resonant conversion circuit and the second resonant conversion circuit. The connection between the first resonant conversion circuit and the second resonant conversion circuit may be either a series connection or a parallel connection. The switching module is configured to turn on or turn off internal switching devices, to implement the parallel connection or the series connection between the first resonant conversion circuit and the second resonant conversion circuit.

The discharging circuit is a circuit for converting a portion of electrical energy into thermal energy or other forms of energy. The discharging circuit may be configured to provide a resistance path when the power supply is turned off or the capacitor discharges, such that the amount of charges on the capacitor plate gradually decreases until a desired discharging state is reached.

The controller 105 is configured to output a first control signal to the discharging circuit in a case that a load characteristic of the resonant converter is a purely resistive characteristic; and to output a second control signal to the discharging circuit in a case that the load characteristic of the resonant converter is a capacitance-voltage characteristic.

The first control signal refers to a signal for closing the discharging circuit, and the second control signal refers to a signal for opening the discharging circuit. As an example, the first control signal may be a high-level signal, and the second control signal may be a low-level signal.

The load characteristic refers to a characteristic exhibited by various electrical devices or electronic devices connected to an output end of the power supply. The load characteristic may be a purely resistive characteristic (R characteristic) or a capacitance-voltage characteristic (CV characteristic). The purely resistive characteristic is to describe a condition in which a current is directly proportional to a voltage in the circuit. The capacitance-voltage characteristic is to describe a condition in which the capacitor in the circuit is in a normal operating range with its capacitance remaining constant fundamentally.

In the resonant converter, different load characteristics reflect different discharging processes.

When the load characteristic is the purely resistive characteristic, the discharging current under the purely resistive characteristic is positively correlated with the input voltage, and thus the energy stored on the capacitors in the resonant converter is converted into thermal energy gradually through the resistors in the discharging current if the power supply of the resonant converter is turned off, that is, the discharging current is lowered along with the reduction of the voltage across the capacitors.

When the load characteristic is the capacitance-voltage characteristic, since the voltage across the capacitor in the resonant converter remains constant, the current also remains constant, discharging fails to be implemented, thus damaging the discharging circuit. Therefore, when the load characteristic is detected as the capacitance-voltage characteristic, the discharging circuit is opened.

In the resonant converter with the purely resistive characteristic, the discharging process is relatively simple and direct. When the power supply of the resonant converter is turned off or the voltage decreases, energy stored in the circuit (if exists) is gradually converted to thermal energy and dissipated through the resistor elements. The current has a linear relationship with the voltage and the relationship follows Ohm's law. The magnitude of the discharging current depends on a resistance of the circuit and an initial voltage. As the electric energy is consumed, the voltage gradually decreases and the current decreases accordingly until the energy in the circuit is completely dissipated and the voltage drops to zero.

It should be understood that under the purely resistive characteristic, the discharging current decreases gradually as the voltage across the capacitor decreases, then the discharging circuit is not damaged due to excessive discharging current, and thus the discharging circuit may be closed in order to discharge the energy in the resonant converter. As an example, reference is made to FIG. 2a, which shows variation of the discharging current under the purely resistive characteristic. A discharging current A decreases as a voltage V on the capacitor decreases.

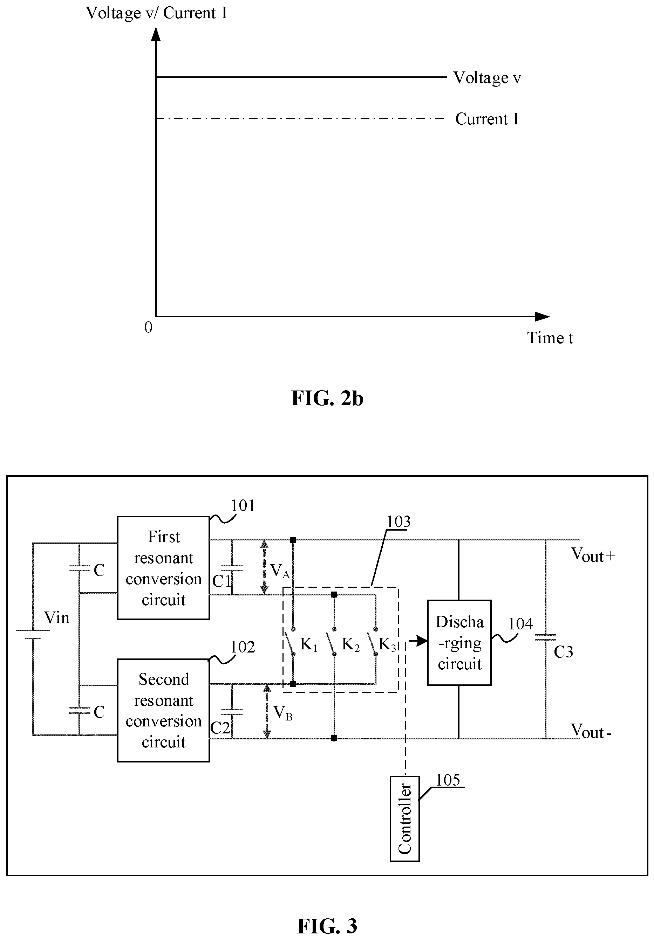

When the load characteristic is the capacitance-voltage characteristic, the discharging circuit may be damaged. Therefore, when the load characteristic is the capacitance-voltage characteristic, the discharging circuit is required to be opened. As an example, reference is made to FIG. 2b, which shows variation of the discharging current under the capacitance-voltage characteristic. A discharging current B and the voltage V on the capacitor remain constant.

Therefore, the controller according to the embodiment of the present disclosure acquires the load characteristic of the resonant converter and then sends the first control signal or the second control signal to the discharging circuit based on the load characteristic to close and open the discharging circuit, thereby avoiding damage to the discharging circuit caused by the capacitor discharging through the discharging circuit when the load characteristic is the capacitance-voltage characteristic, and reducing the damage rate of the discharging circuit.

In the embodiment of the present disclosure, an anti-reverse diode is not provided, thus reducing the cost.

Based on the resonant converter according to the above embodiment, in an implementation, the controller 105 is further configured to obtain an output voltage variation trend of the resonant converter.

The output voltage variation trend refers to a variation of the output voltage of the resonant converter throughout an acquisition period, and the output voltage variation trend may be obtained based on multiple output voltages. As an example, assuming that the acquisition period is 1 second, and the number of the times of acquisition is 5, the voltages in the five acquisitions are 10V, 8V, 7V, 6V, and 4V, and then the output voltage variation trend is 10V→8V→7V→6V→4V (a trend of gradual decrease with time).

The output voltage refers to a voltage outputted by the resonant converter. Multiple output voltages are obtained by closing the discharging circuit and periodically acquiring the voltage at the output end of the resonant converter.

Periodically acquiring the output voltage of the resonant converter refers to acquiring the output voltage of the resonant converter in accordance with a preset period. The preset period refers to a time interval at which the output voltage at the output end of the resonant converter is acquired. For example, the output voltage at the output end of the resonant converter is acquired once every 2 milliseconds. The number of times the output voltage is acquired is generally greater than or equal to three times to avoid randomness or contingency.

It should be noted that in the embodiment of the present disclosure, the periodic acquisition is to acquire a variation trend of the output voltage of the resonant converter. The discharging circuit is opened after the periodic acquisition is implemented, so as to avoid the issue of damage to the discharging circuit caused by the discharging circuit being continuously closed when the load characteristic is the capacitance-voltage characteristic.

It should be understood that a difference between a purely resistive characteristic and a capacitance-voltage characteristic is determined based on the variation trend of the output voltage value of the resonant converter, and thus the load characteristic of the resonant converter is determined based on the output voltage variation trend in the embodiment of the present disclosure.

It should be understood that the voltage variation trend indicates the output voltage is variable if the load characteristic is the purely resistive characteristic; for example, the output voltage gradually decreases with time after the power supply of the resonant converter is turned off. The voltage variation trend indicates the output voltage remains constant if the load characteristic is the capacitance-voltage characteristic; for example, the output voltage remains basically constant with time after the power supply of the resonant converter is turned off. Therefore, the load characteristic may be determined by the output voltage variation trend of the resonant converter

As an example, assuming that an output voltage variation trend A is 10V→8V→7V→6V→4V, it can be seen that the output voltage in the output voltage variation trend A decreases with time, and the load characteristic may be determined to be the purely resistive characteristic based on the output voltage variation trend A. It should be understood that if the output voltage variation trend indicates that the output voltage decreases with time, the load characteristic of the resonant converter may be considered as the purely resistive characteristic.

As another example, assuming that an output voltage variation trend B is 10V→9.8V→10.1V→9.9V→10V, it can be seen that the output voltage in the output voltage variation trend B remains constant with time within an error range, and then the load characteristic may be determined to be the capacitance-voltage characteristic based on the output voltage variation trend B. It should be understood that if the output voltage variation trend indicates that the output voltage varies with time and remains constant within the error range, and then the load characteristic of the resonant converter may be considered as the capacitance-voltage characteristic. The error range is an allowable error range determined based on an actual demand; for example, the error range is from 0V to 0.2V.

It should be understood that in a case that the output voltage variation trend is the same as an input voltage variation trend when the input voltage of the resonant converter varies, the load characteristic of the resonant converter is determined to be the purely resistive characteristic; and in a case that the output voltage variation trend indicates that the output voltage remains constant when the input voltage of the resonant converter varies, the load characteristic of the resonant converter is determined to be the capacitance-voltage characteristic

According to the embodiment of the present disclosure, the load characteristic of the resonant converter can be rapidly determined based on the output voltage variation trend, and the discharging circuit is closed or opened based on the load characteristic, so as to improve the efficiency of determining the load characteristic, and to improve the safety and reliability of the discharging circuit.

Based on the resonant converter according to the above embodiment, in an implementation, the controller 105 is further configured to obtain an equivalent capacitance value and an actual capacitance value corresponding to the resonant converter.

The actual capacitance value is obtained based on the an average variation rate of multiple output voltages; the multiple output voltages are obtained by closing the discharging circuit and periodically acquiring the voltage at the output end of the resonant converter; and the load characteristic of the resonant converter are obtained based on the equivalent capacitance value and the actual capacitance value.

The equivalent capacitance value refers to a capacitance value of the capacitors in the resonant converter after being equalized in theoretical calculation. The actual capacitance value refers to an actual total capacitance value of all the capacitors in the resonant converter.

It should be understood that after the equivalent capacitance value is determined, the actual capacitance value is not equal to the equivalent capacitance value because the capacitors in the resonant converter may be affected by circuit losses or other components in the circuit, and thus the actual capacitance value of the capacitors in the resonant converter is determined by periodically acquiring the output voltage of the resonant converter.

The equivalent capacitance value is associated with an output mode of the resonant converter. The output mode refers to a connection manner between the first resonant conversion circuit and the second resonant conversion circuit in the resonant converter. The output mode may include a series output mode (that is, the first resonant conversion circuit and the second resonant conversion circuit are connected in series) or a parallel output mode (that is, the first resonant conversion circuit and the second resonant conversion circuit are connected in parallel).

It should be understood that the different output modes of the resonant converter correspond to different equivalent capacitance values. Therefore, in an implementation, the output mode of the resonant converter may be acquired, and the equivalent capacitance value of the resonant converter may be further determined based on the output mode, so as to determine equivalent capacitance values in different output modes, thus determining the equivalent capacitance values more accurately.

In an implementation, reference is made to FIG. 3, which is a schematic structural diagram of a power converter according to another embodiment of the present disclosure.

As shown in FIG. 3, the resonant converter according to the embodiment of the present disclosure may include: a first resonant conversion circuit 101, a second resonant conversion circuit 102, a first capacitor C1, a second capacitor C2, a discharging circuit 104, a third capacitor C3, a controller 105, and a switching module 103. The switching module 103 includes a first switch K1, a second switch K2, and a third switch K3. A first input terminal of the first resonant conversion circuit 101 serves as a positive electrode of an input end of the resonant converter, a second input terminal of the first resonant conversion circuit 101 is connected to a first input terminal of the second resonant conversion circuit 102, and a second input terminal of the second resonant conversion circuit 102 serves as a negative electrode of the input end of the resonant converter. A first output terminal of the first resonant conversion circuit 101 is connected to a first terminal of the first capacitor C1, a second output terminal of the first resonant conversion circuit 101 is connected to a second terminal of the first capacitor C1. A first output terminal of the second resonant conversion circuit 102 is connected to a first terminal of the second capacitor C2, and a second output terminal of the second resonant conversion circuit 102 is connected to a second terminal of the second capacitor C2. The first terminal of the first capacitor C1 is connected to a first terminal of the first switch K1, and the second terminal of the first capacitor C1 is connected to a first terminal of the second switch K2 and a first terminal of the third switch K3. The first terminal of the second capacitor C2 is connected to a second terminal of the first switch K1 and a second terminal of the third switch K3, and the second terminal of the second capacitor C2 is connected to a second terminal of the second switch K2. A positive electrode of the first resonant conversion circuit 101 is connected to a first terminal of the discharging circuit 104, and a negative electrode of the second resonant conversion circuit 102 is connected to a second terminal of the discharging circuit 104. The positive electrode of the first resonant conversion circuit 101 is connected to a first terminal of the third capacitor C3, and the negative electrode of the second resonant conversion circuit 102 is connected to a second terminal of the third capacitor C3.

The connection between the first resonant conversion circuit 101 and the second resonant conversion circuit 102 in the resonant converter may be either a series connection or a parallel connection. The first resonant conversion circuit 101 is connected in series with the second resonant conversion circuit (the output mode is the series output mode), if the first switch K1 and the second switch K2 are turned off and the third switch K3 is turned on. The first resonant conversion circuit 101 is connected in parallel with the second resonant conversion circuit 102 (the output mode is the parallel output mode), if the first switch K1 and the second switch K2 are turned on and the third switch K3 is turned off.

As shown in FIG. 3, the resonant converter includes three capacitors: the first capacitor C1, the second capacitor C2, and the third capacitor C3. When the electronic device stops operating, the first capacitor C1, the second capacitor C2, and the third capacitor C3 store residual electrical energy. The electrical energy stored in the first capacitor C1, second capacitor C2, and third capacitor C3 generates discharging currents. These discharging currents may affect and even cause damage to the components or loads of the resonant converter. A capacitance value of the first capacitor is a first capacitance value, a capacitance value of the second capacitor is a second capacitance value, and a capacitance value of the third capacitor is a third capacitance value.

In an implementation, as shown in FIG. 3, when the output mode of the resonant converter is the series output mode, the controller 105 is configured to: add the first capacitance value and the second capacitance value to obtain a capacitance sum value, and to multiply the first capacitance value by the second capacitance value to obtain a capacitance product value; further determine a capacitance ratio of the capacitance product value to the capacitance sum value; and add the third capacitance value and the capacitance ratio to obtain the equivalent capacitance value of the resonant converter.

The capacitance sum value refers to a sum of two capacitance values, and the capacitance product value refers to a product of two capacitance values.

As an example, assuming that the first capacitance value is C1, the second capacitance value is C2, and the third capacitance value is C3, then the capacitance sum value is C1+C2, the capacitance product value is C1×C2, the capacitance ratio of the capacitance product value to the capacitance sum value is (C1×C2)/(C1+C2), and the equivalent capacitance value of the resonant converter is calculated as (C3+((C1×C2)/(C1+C2))).

In another implementation, as shown in FIG. 3, when the output mode of the resonant converter is the parallel output mode, the controller 105 is configured to add the first capacitance value, the second capacitance value, and the third capacitance value to obtain the equivalent capacitance value of the resonant converter.

As an example, assuming that the first capacitance value is C1, the second capacitance value is C2, and the third capacitance value is C3, the equivalent capacitance value of the resonant converter is (C1+C2+C3) when the output mode is the parallel output mode.

It should be understood that in this embodiment, the equivalent capacitance value is calculated as (C3+((C1×C2)/(C1+C2))) when the output mode is the series output mode; and the equivalent capacitance value is calculated as (C1+C2+C3) when the output mode is the parallel output mode.

In an implementation, the controller 105 is configured to: close the discharging circuit and periodically acquire output voltages of the resonant converter; then based on multiple output voltages, obtain the variation rate of output voltages in each pair of two successive acquisitions and obtain an average variation rate of the multiple output voltages throughout an acquisition period; and obtain the actual capacitance value of the resonant converter based on the average variation rate, the acquisition period, and a discharging characteristic of the resistor-capacitor (RC) circuit.

The output voltage refers to a voltage outputted by the resonant converter. Periodically acquiring the output voltage of the resonant converter refers to acquiring the output voltage of the resonant converter in accordance with a preset period. The preset period refers to a time interval at which the output voltage at the output end of the resonant converter is acquired. For example, the output voltage is acquired once every 2 milliseconds. The number of times the output voltage is acquired is generally greater than or equal to three times to avoid randomness or contingency.

It should be noted that in the embodiment of the present disclosure, the periodic acquisition is to acquire a variation trend of the output voltage of the resonant converter. The periodic acquisition can be understood as being performed in a "pre-discharging stage", and therefore the discharging circuit is opened after the periodic acquisition is implemented, so as to avoid the issue of damage to the discharging circuit caused by the discharging circuit being continuously closed when the load characteristic is the capacitance-voltage characteristic.

The variation rate is a parameter describing voltage stability performance or transient response performance of a circuit under varying loads. In the embodiment of the present disclosure, the variation rate is determined based on a variation of output voltages in two successive acquisitions. As an example, assuming that multiple output voltages are 10V, 9V, 8V, 7V, the variation of the output voltages in each pair of two successive acquisitions is 10V-9V=1V, 9V-8V=1V, 8V-7V=1V, and the variation rates are 10%, 11.11%, and 12.5% respectively.

The variation rate includes, but is not limited to, the following two definitions and calculation methods in the embodiment.
(1) The variation rate is defined as a ratio of a percentage of output voltage variation to a percentage of the load variation, which is used to evaluate the stability performance of a power supply circuit under varying loads according to the following equation: variation rate (Load)=(percentage of output voltage variation)/(percentage of load variation). In practical applications, the output voltage is required to remain stable under varying loads.
(2) The variation rate is defined as a percentage of variation of the output voltage with time, which is used to evaluate the transient response performance of the power supply circuit according to the following equation: variation rate (Load)=(percentage of output voltage variation)/time. In practical applications, the output voltage is required to be rapidly regulated to a stable state under varying loads.

The average variation rate refers to an average value of multiple variation rates. For example, if the variation rates are 20%, 30%, and 25%, the average variation rate of the three variation rates is calculated as (20%+30%+25%)/3=25%. It should be understood that multiple variation rates are obtained after determining the variation rates of all pairs of two successive output voltages. Therefore, the average value of the multiple variation rates may further be calculated to obtain the average variation rate for subsequent determination of the actual capacitance value.

The discharging characteristic of the resistor-capacitor circuit refers to a characteristic that the voltage across the capacitor decreases gradually with time when a capacitor storing charges is discharged through a resistor, which may be described through an RC discharging equation.

The RC discharging equation is a mathematical formula for describing a discharging process of a capacitor in the RC circuit. The RC discharging equation may be expressed as V(t)=V0×e^(-t/RC). V(t) represents the voltage across the capacitor in the resonant converter at a time instant t, V0 represents an initial voltage across the capacitor, e represents a base (approximately equal to 2.71828) of an natural logarithm, t represents an elapsed time (that is, the time interval corresponding to the preset period), R represents a resistance value of the resistor in the discharging circuit, and C represents the actual capacitance value of the capacitor in the resonant converter. V(t) and V0 are obtained based on the average variation rate.

Therefore, in the embodiment of the present disclosure, the actual capacitance value of the resonant converter may be determined by the RC discharging equation defined by the discharging characteristic of the RC circuit, the average variation rate and the preset period.

As an example, assuming that the average variation rate is K, an initial output voltage (the output voltage acquired for the first time) is V0, and the resistance value is R, the preset period is one second, and the output voltage is acquired once every one second for a total of five times. The output voltage and a corresponding time t are recorded starting from the time instant t=0, and thus five sets of data may be obtained based on the initial output voltage and the average variation rate K, which are (t0, V0), (t1, V1), (t2, V2), (t4, V4), (t5, V5). For example, V1=(1-k)×V0. Each piece of data is fitted according to the RC discharging equation V(t)=V0×e^(-t/RC), and further the actual capacitance value C is estimated through a numerical method (for example, the least square method), so that the RC discharging equation best fits the experimental data, or a specific time instant (for example, t=RC, and V(t)=V0/e) is determined and then the voltage V(t) at the time instant is measured and substituted into the equation to calculate the actual capacitance value C.

After the equivalent capacitance value and the actual capacitance value are determined in the above manner, the load characteristic of the resonant converter may be determined based on the equivalent capacitance value and the actual capacitance value.

It should be understood that the load characteristic of the resonant converter can be determined by determining a difference between the equivalent capacitance value and the actual capacitance value. In an embodiment, a discharging process under a purely resistive characteristic conforms to an RC curve, while a discharging process under a capacitance-voltage characteristic does not conform to the RC curve. The RC curve refers to a transient response curve of the resistor-capacitor (RC) circuit. The RC curve describes a pattern that the output voltage or the current of the resonant converter varies with time when the voltage on the capacitor of the resonant converter varies.

If the load characteristic of the resonant converter is the purely resistive characteristic, the voltage on the capacitor of the resonant converter gradually decreases with discharging through the discharging circuit, that is, the calculated equivalent capacitance value should be equal to the estimated actual capacitance value. If the load characteristic of the resonant converter is the capacitance-voltage characteristic, the voltage on the capacitor of the resonant converter does not decrease with the discharging through the discharging circuit but remains constant, that is, a difference between the calculated equivalent capacitance value and the estimated actual capacitance value continuously increases.

Therefore, the actual capacitance value may be determined through an RC equation, and then the actual capacitance value is compared with the equivalent capacitance value. If the difference between the actual capacitance value and the equivalent capacitance value is outside a preset error range, the load characteristic is considered as the capacitance-voltage characteristic; otherwise, the load characteristic is considered as the purely resistive characteristic.

In an implementation, a difference between the equivalent capacitance value and the actual capacitance value may be obtained, and it is further determined whether the difference is within the preset error range. If the difference is within the preset error range, the load characteristic of the resonant converter is the purely resistive characteristic; and if the difference is outside the preset error range, the load characteristic of the resonant converter is the capacitance-voltage characteristic.

It is understood that, a theoretical value may be deviated from an actual value, and thus a preset error range may be set in order to minimize the impact of the deviation on the accuracy of determination of the load characteristic. The preset error range refers to a difference range between the actual capacitance value and the equivalent capacitance value when the load characteristic is the purely resistive characteristic. The preset error range has an upper limit. If the difference between the equivalent capacitance value and the actual capacitance value is greater than the upper limit, the load characteristic of the resonant converter is considered as the capacitance-voltage characteristic; otherwise, the load characteristic of the resonant converter is considered as the purely resistive characteristic.

In an embodiment, the difference between the equivalent capacitance value and the actual capacitance value is considered to be within the preset error range as long as the difference value is less than or equal to the upper limit, and the difference between the equivalent capacitance value and the actual capacitance value is considered to be outside the preset error range once the difference is greater than the upper limit.

In another embodiment, the difference between the equivalent capacitance value and the actual capacitance value is considered to be within the preset error range only if the difference is less than the upper limit, and the difference between the equivalent capacitance value and the actual capacitance value is considered to be outside the preset error range once the difference is greater than or equal to the upper limit.

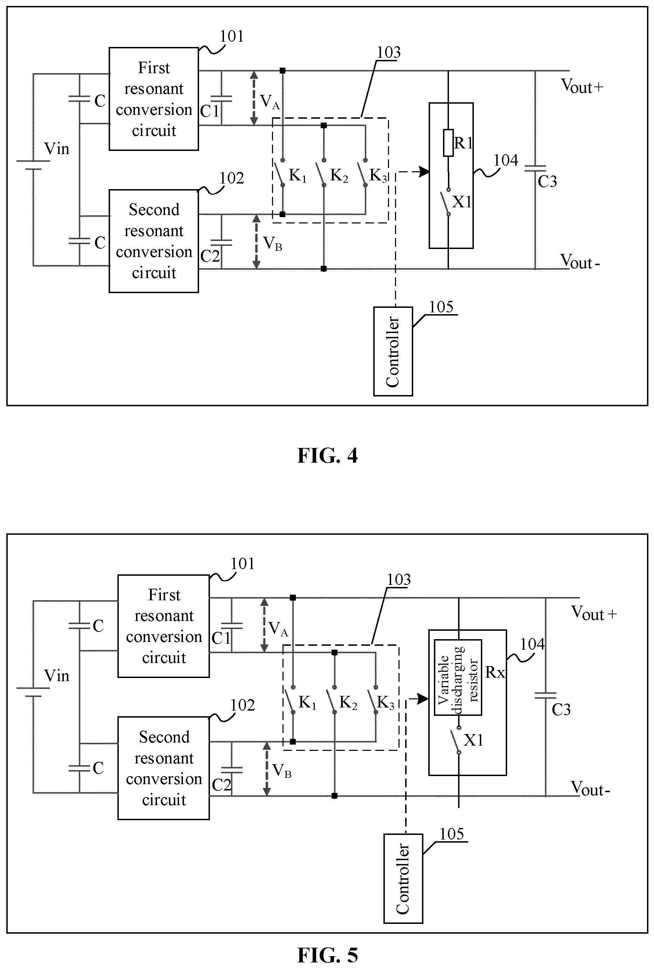

Based on the method for controlling a discharging circuit according to the above embodiment, reference is made to FIG. 4, which is a schematic structural diagram of a resonant converter according to another embodiment of the present disclosure. On the basis of the resonant converter as shown in FIG. 3, the discharging circuit 104 may include a discharging resistor R1 and a switching device X1, where the switching device X1 is connected in series with the discharging resistor R1 to form a branch, and the branch is connected between the positive output terminal and the negative output terminal of the resonant converter.

The switching device refers to a device for closing or opening the discharging circuit, which may be a MOSFET (Metal-Oxide-Semiconductor Field Effect Transistor), or other devices for closing or opening a circuit, and is not limited herein.

In an implementation, the controller 105 may turn on the switching device X1 to close the discharging circuit. It should be understood that the switching device X1 may be turned on to close the discharging circuit when the load characteristic is the purely resistive characteristic, and the discharging resistor R1 of the discharging circuit converts residual electric energy in the resonant converter to thermal energy to implement discharging.

Based on the resonant converter according to the above embodiments, reference is further made to FIG. 4. In an implementation, after the discharging circuit is closed, the controller is further configured to output, in a case that the output voltage of the resonant converter is less than or equal to a third voltage, a fifth control signal to open the discharging circuit; or output, in a case that a discharging duration of the discharging circuit is greater than a third duration, a fifth control signal to open the discharging circuit.

It should be understood that in the embodiments of the present disclosure, determining whether the residual voltage stored on the capacitor in the resonant converter satisfies requirements may be determined in the following two manners.

In the first manner, it is determined whether the output voltage is less than or equal to a preset voltage. The preset voltage may be a safety voltage for a human body that does not cause a safety hazard to humans, or may be a voltage specified according to actual design requirements. Therefore, the third voltage in the embodiment of the present disclosure is the preset voltage. If the output voltage of the resonant converter is less than or equal to the third voltage, discharging is stopped.

In the second manner, the resonant converter or a system in which the resonant converter is located has requirements for the discharging duration, and thus a total discharging duration is required to be set. The preset discharging duration refers to a maximum duration allowed for the discharging process. Therefore, the third duration in the embodiment of the present disclosure is the preset discharging duration. By determining whether the discharging duration is greater than the third duration, it is determined whether to continue the discharging. If the discharging duration is greater than the third duration, the discharging may be stopped.

It should be noted that when the discharging circuit includes only one discharging resistor and one switching device, the output mode of the resonant converter may be the series output mode or the parallel output mode, and the output mode of the resonant converter is not limited herein.

Based on the above embodiment, the discharging circuit is closed in the process of determining the actual capacitance value. When the discharging circuit includes only one resistor and one switching device and the load characteristic is the capacitance-voltage characteristic, the voltage under the capacitance-voltage characteristic does not decrease in accordance with an RC curve, and thus the resistors in the discharging circuit withstand power loss *V*²/*R* of heating, which may lead to burnout of the resistors in the discharging circuit .

To address the issue of burnout of the discharging resistor when the actual capacitance value is determined under the capacitance-voltage characteristic, in another implementation, the discharging process can be divided into multiple stages for discharging.

Referring to FIG. 5, the discharging circuit 104 includes a variable discharging resistor Rx and a controller. The controller is configured to control the variable discharging resistor in the discharging circuit to have a first resistance value, in a case that the load characteristic of the resonant converter is the purely resistive characteristic.

The variable discharging resistor refers to a unit whose a resistance value varying within a preset resistance range, which may be a module with a resistance adjustable by a signal, may be a variable resistor, or a circuit formed by at least two resistors. The first resistance value refers to a resistance value required in a first discharging stage.

It should be understood that according to the embodiment, the variable discharging resistor may be set to have a large resistance value (that is, a first resistance value) in order to implement discharging, preventing the discharging resistor in the discharging circuit from being burnt out during the first discharging stage.

Furthermore, the controller 105 is further configured to, in a case that the output voltage of the resonant converter is less than or equal to a first voltage, output a third control signal to control the variable discharging resistor in the discharging circuit to have a second resistance value; or, in a case that the discharging duration of the discharging circuit is greater than a first duration, output the third control signal to control the variable discharging resistor in the discharging circuit to have the second resistance value; where the second resistance value is less than the first resistance value. The third control signal refers to a control signal used to adjust the resistance value of the variable discharging resistor from a current resistance value to the second resistance value.

It should be understood that when the variable discharging resistor with the first resistance value is connected to the discharging circuit, the discharging circuit performs discharging with the first resistance value. However, a discharging current is small due to the large first resistance value, and the discharging duration may be long, resulting in a low discharging efficiency. Therefore, according to the embodiment of the present disclosure, a stepwise (or referred to as graded) discharging may be performed, where the discharging is performed with a small current in the first discharging stage to avoid burnout of the discharging circuit caused by excessive current, and the output voltage of the resonant converter or the discharging duration may be detected to determine whether to proceed to a second discharging stage.

It should be understood that the output voltage of the resonant converter gradually decreases after being discharged for a period of time in the first discharging stage, and the first voltage or the first duration is a basis for determining whether to enter the second discharging stage. It can be understood that when the output voltage is less than the first voltage or when the discharging duration is less than the first duration, even if the resistance value of the discharging resistor becomes smaller, the discharging resistor is not burned out after being connected to the discharging circuit. The first voltage refers to a minimum voltage value allowed in the first discharging stage, and the first duration refers to a maximum duration allowed in the first discharging stage. Both the first voltage and the first duration may be preset.

It should be understood that when the first discharging stage is completed, the second discharging stage follows. Since the discharging process conforms to the RC curve, the voltage gradually decreases. In such case, the resistance value of the variable discharging resistor is adjusted from the first resistance value to the second resistance value in order to improve the discharging efficiency, where the second resistance value is less than the first resistance value, and thus the discharging current increases, thus improving the discharging efficiency.

Furthermore, the controller 105 is configured to, in a case that the output voltage of the resonant converter is less than or equal to the second voltage, output a fourth control signal to open the discharging circuit; or, in a case that the discharging duration is greater than a second duration, output the fourth control signal to open the discharging circuit.

The fourth control signal refers to a control signal for opening the discharging circuit. The second voltage is less than the first voltage.

It should be understood that in the embodiments of the present disclosure, determining whether the residual voltage stored on the capacitor in the resonant converter satisfies requirements may be determined in the following two manners.

In the first manner, the second voltage is set as the preset voltage. If the output voltage of the resonant converter is less than or equal to the second voltage during the second discharging stage, the discharging may be stopped. It should be noted that, since the first voltage is used to determine whether the resonant converter may proceed to the second discharging stage, the first voltage is greater than the second voltage.

In the second manner, a preset discharging duration is set for a discharging duration of the resonant converter throughout the entire discharging process based on design requirements for the system in which the resonant converter is located. The sum of the first duration and the second duration is equal to the preset discharging duration, that is, the preset discharging duration refers to a maximum duration allowed for the discharging process. The first duration is used to determine whether the discharging stage of the resonant converter may proceed to the second discharging stage. If the discharging duration is greater than the first duration, it is considered that the first discharging stage is terminated, and the resonant converter proceeds to the second discharging stage for discharging. Further, it is determined whether to continue the discharging by determining whether the discharging duration of the second discharging stage is greater than the second duration. If the discharging duration is greater than the second duration, the discharging may be stopped.

It is understandable that, since the discharging process includes two stages, the sum of the discharging duration of the first discharging stage and the discharging duration of the second discharging stage is equal to the total discharging duration of the entire discharging process. It is required to ensure that the sum of the discharging duration of the first discharging stage and the discharging duration of the second discharging stage is less than or equal to the preset discharging duration. The discharging duration of each discharging stage may be limited. In an embodiment, the first duration and the second duration are both preset.

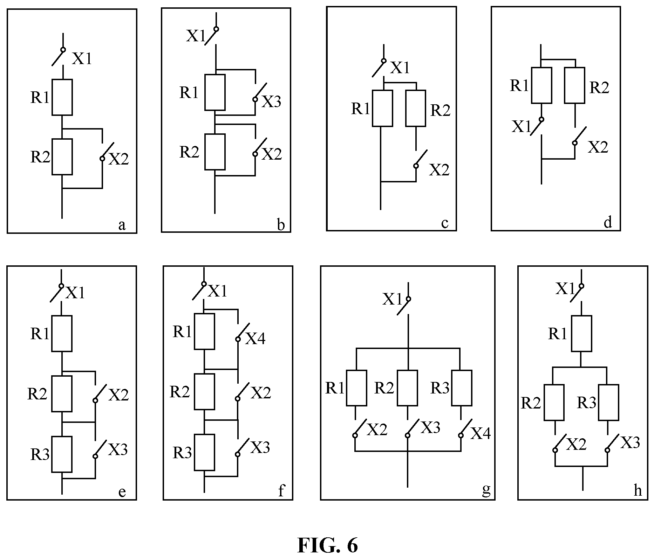

Based on the resonant converter and the method for controlling a discharging circuit according to the above embodiments, in some implementations, the variable discharging resistor may include at least two discharging resistors and at least one switching device. In order to illustrate a connection relationship of multiple discharging resistors and multiple switching devices, reference is made to FIG. 6, which is a schematic structural diagram of a discharging circuit according to an embodiment of the present disclosure. As shown in FIG. 6, the discharging circuit according to the embodiment of the present disclosure may include a first switching device X1 and a variable discharging resistor, where the variable discharging resistor may include, but is not limited to, the following structures.
(1) As shown in a in FIG. 6, the variable discharging resistor includes a first discharging resistor R1, a second discharging resistor R2, and a second switching device X2. The first discharging resistor R1, the first switching device X1, and the second discharging resistor R2 are connected in series, and the second switching device X2 is connected in parallel with the second discharging resistor R2.

In a first discharging stage, the first switching device X1 is turned on and the second switching device X2 is turned off.

In a second discharging stage, both the first switching device X and the second switching device X2 are turned on.

(2) As shown in b in FIG. 6, the variable discharging resistor includes a first discharging resistor R1, a second discharging resistor R2, a second switching device X2, and a third switching device X3. The first switching device X1, the first discharging resistor R1, and the second discharging resistor R2 are connected in series. The second switching device X2 is connected in parallel with the second discharging resistor R2, and the third switching device X3 is connected in parallel with the first discharging resistor R1.

In a first discharging stage, the first switching device X1 is turned on, and the second switching device X2 and the third switching device X3 are turned off.

In a second discharging stage, the first switching device X1 is turned on, the second switching device X2 is turned on, and the third switching device X3 is turned off. Alternatively, the first switching device X1 is turned on, the second switching device X2 is turned off, and the third switching device X3 is turned on. Since a resistance value of the first discharging resistor R1 may be different from a resistance value of the second discharging resistor R2, which resistor is chosen to be shorted in the second discharging stage may be determined based on specific situations.

(3) As shown in c in FIG. 6, the variable discharging resistor includes a first discharging resistor R1, a second discharging resistor R2, and a second switching device X2. The first switching device X1 is connected in series with the first discharging resistor R1. The second switching device X2 is connected in series with the second discharging resistor R2 to form a branch, and the branch is connected in parallel with the first discharging resistor R1.

In a first discharging stage, the first switching device X1 is turned on, and the second switching device X2 is turned off.

In a second discharging stage, the first switching device X1 is turned on, and the second switching device X2 is turned on.

(4) As shown in d in FIG. 6, the variable discharging resistor includes a first discharging resistor R1, a second discharging resistor R2, and a second switching device X2. The first switching device X1 is connected in series with the first discharging resistor R1 to form a branch. The second switching device X2 is connected in series with the second discharging resistor R2 to form another branch. The two branches are connected in parallel.

In a first discharging stage, the first switching device X1 is turned on, and the second switching device X2 is turned off.

In a second discharging stage, the first switching device X1 is turned on, and the second switching device X2 is turned on.

It can be understood that in a case that the number of discharging resistors included in the variable discharging resistor is increased, the discharging stages may also be increased. For example, in a case that the variable discharging resistor may have resistance value variation in three gradients, the discharging may be performed in three discharging stages.

(5) As shown in e in FIG. 6, the variable discharging resistor includes a first discharging resistor R1, a second discharging resistor R2, a third discharging resistor R3, a second switching device X2, and a third switching device X3. The first switching device X1, the first discharging resistor R1, the second discharging resistor R2, and the third discharging resistor R3 are connected in series, the second switching device X2 is connected in parallel with the second discharging resistor R2, and the third switching device X3 is connected in parallel with the third discharging resistor R3.

In a first discharging stage, the first switching device X1 is turned on, and the second switching device X2 and the third switching device X3 are turned off.

In a second discharging stage, the first switching device X1 is turned on, and one of the second switching device X2 and the third switching device X3 is turned on.

In a third discharging stage, the first switching device X1 is turned on, and the second switching device X2 and the third switching device X3 are turned on.

It can be seen that the resistance value gradually decreases from the first discharging stage to the third discharging stage.

(6) As shown in f in FIG. 6, the variable discharging resistor includes a first discharging resistor R1, a second discharging resistor R2, a third discharging resistor R3, a second switching device X2, a third switching device X3, and a fourth switching device X4. The first switching device X1, the first discharging resistor R1, the second discharging resistor R2, and the third discharging resistor R3 are connected in series, the second switching device X2 is connected in parallel with the second discharging resistor R2, the third switching device X3 is connected in parallel with the third discharging resistor R3, and the fourth switching device X4 is connected in parallel with the first discharging resistor R1.

In a first discharging stage, the first switching device X1 is turned on, and the second switching device X2, the third switching device X3, and the fourth switching device X4 are turned off.

In a second discharging stage, the first switching device X1 is turned on, and one of the second switching device X2, the third switching device X3 and the fourth switching device X4 is turned on.

In a third discharging stage, the first switching device X1 is turned on, any two of the second switching device X2, the third switching device X3 and the fourth switching device X4 are turned on.

In a fourth discharging stage, the second switching device X2, the third switching device X3 and the fourth switching device X4 are turned on.

It can be seen that the resistance value gradually decreases from the first discharging stage to the fourth discharging stage.

(7) As shown in g in FIG. 6, the variable discharging resistor includes a first discharging resistor R1, a second discharging resistor R2, a third discharging resistor R3, a second switching device X2, a third switching device X3, and a fourth switching device X4. The second switching device X2 is connected in series with the first discharging resistor R1 to form a first branch, the third switching device X3 is connected in series with the second discharging resistor R2 to form a second branch, the fourth switching device X4 is connected in series with the third discharging resistor R3 to form a third branch. The first branch, the second branch and the third branch are connected in parallel.

In a first discharging stage, the first switching device X1 is turned on, one of the second switching device X2, the third switching device X3, and the fourth switching device X4 is turned on, and the remaining switching devices are turned off.

In a second discharging stage, the first switching device X1 is turned on, and any two of the second switching device X2, the third switching device X3, and the fourth switching device X4 are turned on.

In a third discharging stage, the first switching device X1, the second switching device X2, the third switching device X3, and the fourth switching device X4 are turned on.

It can be seen that the resistance value gradually decreases from the first discharging stage to the third discharging stage.

(8) As shown in h in FIG. 6, the variable discharging resistor includes the first discharging resistor R1, the second discharging resistor R2, the third discharging resistor R3, the second switching device X2, and the third switching device X3. The first switching device X1, the first discharging resistor R1, the second discharging resistor R2, and the second switching device X2 are connected in series, and the third discharging resistor R3 and the third switching device X3 are connected in series to form a branch. The branch is connected in parallel with another branch formed by the second discharging resistor R2 connected in series with the second switching device X2.

In a first discharging stage, the first switching device X1 is turned on, the second switching device X2 is turned on, the third switching device X3 is turned off, and a resistance value of the second discharging resistor R2 is greater than a resistance value of the third discharging resistor R3.

In a second discharging stage, the first switching device X1 is turned on, the second switching device X2 is turned off, and the third switching device X3 is turned on.

In a third discharging stage, the first switching device X1, the second switching device X2 and the third switching device X3 are turned on.

It can be seen that the resistance value gradually decreases from the first discharging stage to the third discharging stage.

It should be understood that in the eight exemplary structures described above, the resistance value of connected resistors in the first discharging stage is maximum and the resistance value of connected resistors in the last discharging stage is minimum, and the discharging is performed in accordance with a gradient from the first discharging stage to the last discharging stage, so as to is improve the discharging efficiency under a premise that the resistors in the discharging circuit are not burned out.

In another implementation, when the discharging circuit includes multiple discharging resistors, the discharging may be performed in multiple stages. That is, a resistance value of a combination of the multiple discharging resistors is set to a maximum resistance value in a first discharging stage for discharging to avoid burnout of the discharging resistors due to a too large rate of heat loss, and the resistance value of the combination of the multiple discharging resistors is decreased in turn from a second discharging stage to an N-th discharging stage to improve discharging efficiency. Further, when the multiple discharging resistors are connected in series, from the first discharging stage to the N-th discharging stage, the number of the discharging resistor decreases from a maximum number to one; when the multiple discharging resistors are connected in parallel, from the first discharging stage to the N-th discharging stage, the number of the discharging resistor increases from one to the maximum number in order to reduce a total resistance value; and when the multiple discharging resistors are connected in series and parallel, the total resistance value of the combination of the discharging resistors decreases from the maximum resistance value to the minimum resistance value in different stages.

Based on the resonant converter according to the above embodiments, further combined with FIG. 4, when the switching device X1 is a metal oxide semiconductor (MOS) switch, a method for controlling a discharging circuit is further provided according to an embodiment of the present disclosure, and may include the following steps 1 to 3

In step 1, an equivalent capacitance value is calculated based on an output mode of the resonant converter.

A current output mode may be determined based on an operating state of the resonant converter. Assuming that a first capacitance value is C1, a second capacitance value is C2, and a third capacitance value is C3. If the output mode is a series mode, an equivalent capacitance value at an output end is calculated as (C3+((C1×C2)/(C1+C2))); and if the output mode is a parallel mode, the equivalent capacitance value at the output end is calculated as (C1+C2+C3).

In step 2, a load characteristic of the resonant converter is acquired.

The MOS switch is turned on, and the discharging resistor R1 is connected to the discharging circuit, and a timer is started at the same time; then an instantaneous value of the output voltage VT is recorded every T periods; the MOS switch is turned off after the number of records is greater than three; a variation rate (that is, an instantaneous variation rate) of the instantaneous values of the output voltages VT in each pair of two successive records is further calculated to obtain a variation rate corresponding to each instantaneous value; then an average value of variation rates (that is, an average instantaneous variation rate) is calculated based on multiple variation rates of the instantaneous values of all the output voltages VT; then an actual capacitance value is calculated based on the average value, the period T, and a discharging characteristic of the RC circuit; and finally, the actual capacitance value is compared with the equivalent capacitance value calculated in step 1, and the load characteristic is the purely resistive characteristic if a difference between the actual capacitance value and the equivalent capacitance value is within a preset error range; and otherwise, the load characteristic is the characteristic.

In step 3, a discharging prompt or a warning prompt is given based on the load characteristic.

If the load characteristic is the purely resistive characteristic, the MOS switch is turned on, the discharging circuit starts a normal discharging, and the timer is started. It is determined whether the output voltage is less than or equal to a preset voltage, or whether the timer expires; and if the output voltage is less than or equal to the preset voltage, or the timer expires, the MOS switch is turned off, and the discharging is terminated. If the load characteristic is the CV characteristic, the MOS switch is turned off, the discharging is terminated and the warning prompt is given. The preset voltage may be 36V, 20V, 15V or other voltage values, which are determined based on the actual design requirements, and is not limited herein.

In the embodiments of the present disclosure, the load characteristic is determined, and the discharging is implemented based on the load characteristic without providing with the anti-reverse diode, reducing a hardware cost. Further, the discharging circuit is opened when the load characteristic is the CV characteristic, avoiding damage to the discharging circuit in a case of connecting a battery load, and improving the stability of the discharging circuit.

In some implementations, when the load characteristic is the capacitance-voltage characteristic, the switching device is turned off, and a warning message is sent.

The warning message refers to a message for providing warning to maintenance personnel, and the warning may be in the form of a flashing light, a sounding buzzer, a pop-up window of a host computer, a message sent by a third-party application, and so on, which is not limited herein.

It should be understood that when the load characteristic is the capacitance-voltage characteristic, no matter how many discharging resistors are included in the discharging resistor, the discharging circuit is opened and a warning message is sent so that the maintenance personnel can perform maintenance on the electronic device to avoid damage to the discharging circuit.

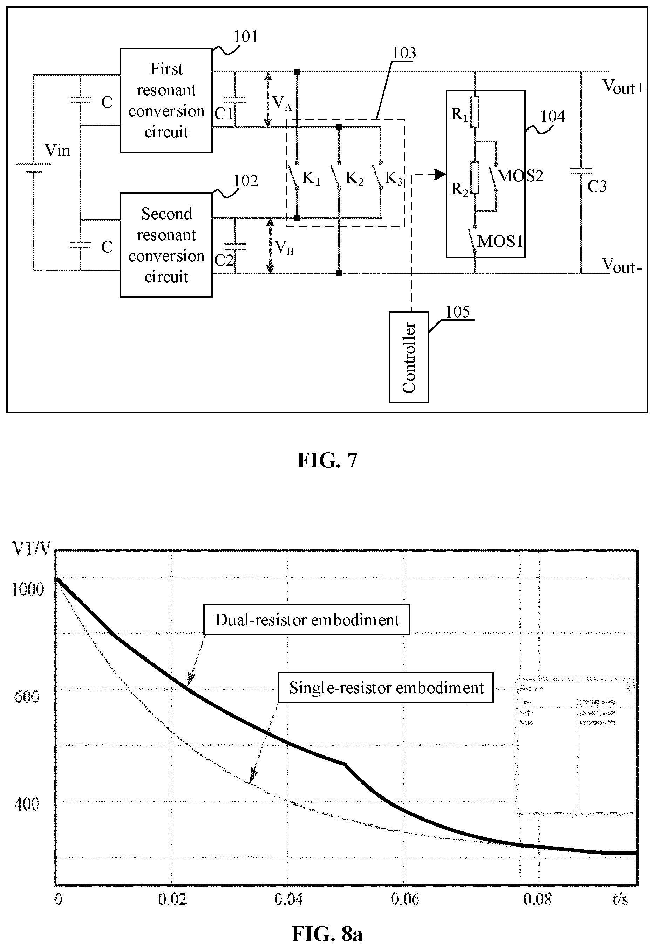

Based on the method for controlling a discharging circuit according to the above embodiments, reference is made to FIG. 7, which is a schematic structural diagram of a resonant converter according to another embodiment of the present disclosure. Combined with FIG. 7, when the discharging circuit in the resonant converter includes a first discharging resistor R1, a second discharging resistor R2, a first switching device MOS1, and a second switching device MOS2, a method for controlling a discharging circuit is further provided according to an embodiment of the present disclosure, which may include the following steps 1 to 3.

In step 1, an equivalent capacitance value is calculated based on an output mode of the resonant converter.

A current output mode may be determined based on an operating state of the resonant converter. Assuming that a first capacitance value is C1, a second capacitance value is C2, and a third capacitance value is C3. If the output mode is a series mode, an equivalent capacitance value at an output end is calculated as (C3+((C1×C2)/(C1+C2))); and if the output mode is a parallel mode, the equivalent capacitance value at the output end is calculated as (C1+C2+C3).

In step 2, a load characteristic of the resonant converter is determined.

The MOS1 is turned on and the MOS2 is turned off, to connect the first discharging resistor R1 in series with the second discharging resistor R2, and a timer is started at the same time; then an instantaneous value of the output voltage VT is recorded every T periods; the MOS1 is turned off after the number of records is greater than three; a variation rate (that is, an instantaneous variation rate) of the instantaneous values of the output voltages VT in each pair of two successive records is further calculated to obtain a variation rate corresponding to each instantaneous value; then an average value of variation rates (that is, an average instantaneous variation rate) is calculated based on multiple variation rates of the instantaneous values of all the output voltages VT; then an actual capacitance value is calculated based on the average value (the average instantaneous variation rate), a period T, and an RC discharging equation (a discharging characteristic of the RC circuit); and finally, the actual capacitance value is compared with the equivalent capacitance value calculated in step 1, and the load characteristic is the purely resistive characteristic if a difference between the actual capacitance value and the equivalent capacitance value is within a preset error range; and otherwise, the load characteristic is the CV characteristic.

In step 3, a discharging prompt or a warning prompt is given based on the load characteristic.

If the load characteristic is the purely resistive characteristic, the MOS1 switch is turned on and the MOS2 switch is turned off, that is, a first discharging stage starts, and the timer is started.

During the first discharging stage, further, it is determined whether the output voltage reaches the first voltage or whether time on the timer is greater than the first duration. If the output voltage reaches the first voltage or the time on the timer is greater than the first duration, the MOS1 switch and the MOS2 switch are turned on, a second discharging stage starts, and the timer is started.

During the second discharging stage, it is further determined whether the output voltage reaches the second voltage or whether time on the timer is greater than the second duration. If the output voltage reaches the second voltage or the time on the timer is greater than the second duration, the MOS1 switch and the MOS2 switch are turned off, and the detection and the discharging are terminated.

If the load characteristic is the CV characteristic, the MOS1 switch and the MOS2 switch are turned off, and the discharging is terminated or a warning prompt is given.

It should be noted that in the embodiment of the present disclosure, two discharging resistors are taken as an example to illustrate two discharging stages with two discharging resistors. In other implementations, multiple discharging resistors (the structures of discharging circuits as described in FIG. 6 above) may be configured, and a discharging process of multiple discharging resistors may be referred to the discharging process of two discharging resistors, which are not repeated here.

In the embodiment of the present disclosure, discharging is performed in multiple stages through two discharging resistors, which reduces the heating power of the resistors in the discharging circuit and reduces a conduction current of the MOS during a load characteristic determination stage, and improves the discharging efficiency without changing discharging duration.

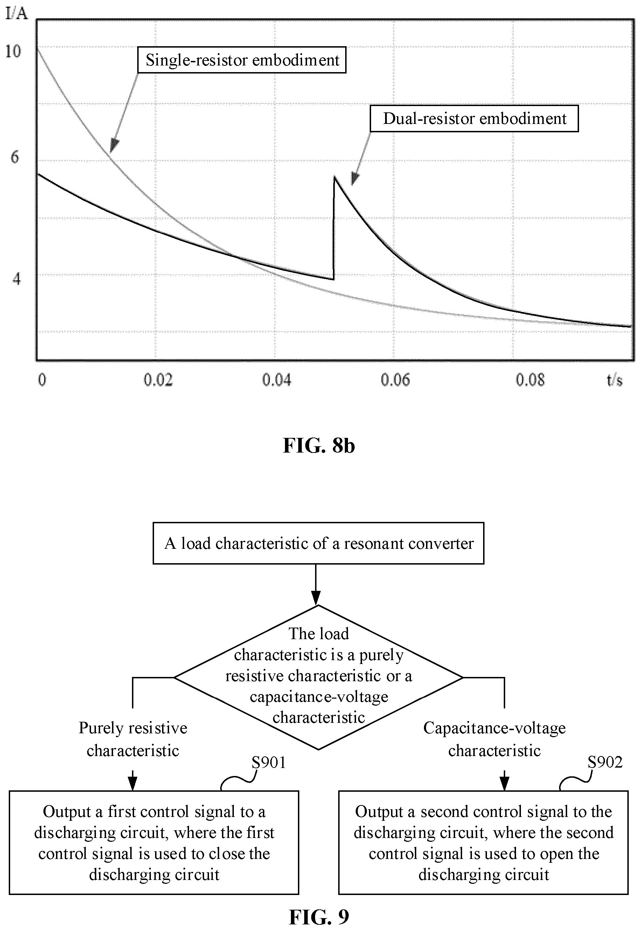

Based on the discharging process in which the discharging circuit includes a single discharging resistor (referred to as a single-resistor embodiment) and the discharging process in which the discharging circuit includes two or more discharging resistors (referred to as a multi-resistor embodiment) according to the above embodiments, as further shown in conjunction with FIG. 8a and FIG. 8b, FIG. 8a is a schematic diagram of a curve of a residual voltage variation in a single-resistor discharging process according to an embodiment of the present disclosure, and FIG. 8b is a schematic diagram of a curve of a current variation of a switching device in a dual-resistor discharging process according to an embodiment of the present disclosure.

As shown in FIG. 8a, the dual-resistor embodiment has a higher discharging efficiency than the single-resistor embodiment under a same discharging duration. As shown in FIG. 8b, in the initial discharging stage (that is, from a time instant 0 to a time instant when the currents of the single-resistor embodiment and the dual-resistor embodiment are the same), the current of the dual-resistor embodiment in the discharging process is less than the current of the single-resistor embodiment in the discharging process, avoiding burnout of the discharging circuit due to excessive current. Further, in the subsequent discharging stage (from the time instant when the currents for the single-resistor embodiment and the dual-resistor embodiment are the same to a last time instant), the current of the dual-resistor embodiment may be increased by decreasing the resistance value, further improving the discharging efficiency.

Based on the resonant converter according to the above embodiments, reference is made to FIG. 9, which is a flowchart illustrating a method for controlling a resonant converter according to an embodiment of the present disclosure.

As shown in FIG. 9, the resonant converter in the embodiment of the present disclosure is the resonant converter described in any of the above embodiments. The method for controlling a resonant converter according to the present disclosure may include step S901 to step S902.

In step S901, a first control signal is outputted to a discharging circuit in a case that a load characteristic of the resonant converter is a purely resistive characteristic, where the first control signal is used to close the discharging circuit.

In step S902, a second control signal is outputted to the discharging circuit in a case that the load characteristic of the resonant converter is a capacitance-voltage characteristic, where the second control signal is used to open the discharging circuit.

In an implementation, the method further includes: obtaining an output voltage variation trend of the resonant converter, where the output voltage variation trend is obtained based on multiple output voltages; the multiple output voltages are obtained by periodically acquiring a voltage at an output end of the resonant converter; and the output voltage variation trend is used to determine the load characteristic of the resonant converter.

In an implementation, the method further includes: obtaining an equivalent capacitance value and an actual capacitance value corresponding to the resonant converter, where the actual capacitance value is obtained based on an average variation rate of the multiple output voltages; the multiple output voltages are obtained by periodically acquiring the voltage at the output end of the resonant converter; and the load characteristic of the resonant converter is obtained based on the equivalent capacitance value and the actual capacitance value.

In an implementation, the discharging circuit includes a variable discharging resistor. In a case that the load characteristic of the resonant converter is a purely resistive characteristic, the variable discharging resistor with a first resistance value is connected to the discharging circuit. The method further includes: in a case that the output voltage of the resonant converter is less than or equal to a first voltage, outputting a third control signal, to control the variable discharging resistor in the discharging circuit to have a second resistance value; or in a case that the discharging duration of the discharging circuit is greater than a first duration, outputting the third control signal, to control the variable discharging resistor in the discharging circuit to have a second resistance value, where the second resistance value is less than the first resistance value.

In an implementation, after the variable discharging resistor with the second resistance value is connected to the discharging circuit, the method further includes: in a case that the output voltage of the resonant converter is less than or equal to a second voltage, outputting a fourth control signal, to open the discharging circuit; or, in a case that the discharging duration is greater than a second duration, outputting the fourth control signal, to open the discharging circuit; where the second voltage is less than the first voltage.

In an implementation, after the discharging circuit is closed, the method further includes: in a case that the output voltage of the resonant converter is less than or equal to a third voltage, outputting a fifth control signal, to open the discharging circuit; or, in a case that the discharging duration of the discharging circuit is greater than a third duration, outputting the fifth control signal, to open the discharging circuit.

The method for controlling a resonant converter according to the embodiment of the present disclosure has identical beneficial effects as the resonant converter according to the above embodiments, and therefore are not described in detail.

According to an embodiment of the present disclosure, an inverter is further provided. The inverter includes the resonant converter described in any of the above embodiments.

According to an embodiment of the present disclosure, a photovoltaic system is further provided. The photovoltaic system includes a controller and the inverter described in any of the above embodiments.

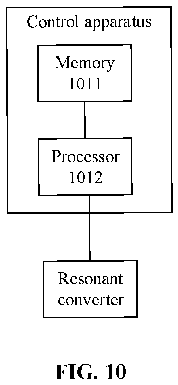

In an implementation, reference is made to FIG. 10, which is a schematic diagram of a control apparatus according to an embodiment of the present disclosure.

The control apparatus may include a memory 1011 and a processor 1012. The processor 1012 may be connected to the resonant converter and may drive a switch in the switching module in the resonant converter. As shown in FIG. 10, the memory may be a random access memory (RAM), a flash memory, a read-only memory (ROM), an EPROM memory, a non-volatile read-only memory (EPROM), a register, a hard disk, a removable disk, and the like.

The memory 1011 may store computer instructions, and when the computer instructions stored in the memory 1011 are executed by the processor 1012, the processor 1012 may be configured to perform the method for controlling a resonant converter. The memory 1011 may further store data, such as the preset error range, the equivalent capacitance value, the actual capacitance value, the RC equation, and other information mentioned in the above embodiments.

All or part of the above embodiments may be implemented by software, hardware, firmware or any combination thereof. When implemented by software, all or part of the functions may be implemented in a form of a computer program product. The computer program product includes one or more computer instructions. When the computer program instructions are loaded and executed on a computer, all or part of the processes or functions described in the embodiments of the present disclosure are generated. The computer may be a general-purpose computer, a special-purpose computer, a computer network, or another programmable apparatus. The computer instructions may be stored in a computer readable storage medium or transmitted from one computer readable storage medium to another computer readable storage medium. For example, the computer instructions may be transmitted from one website, computer, server or data center to another website, computer, server or data center in a wired (for example, a coaxial cable, an optical fiber or a digital subscriber line (DSL)) or wireless (for example, infrared, wireless or microwave) manner. The computer readable storage medium may be any available medium capable of being accessed by a computer or may be a data storage device, such as a server and a data center, integrated by one or more available media. The available medium may be a magnetic medium (for example, a floppy disk, a hard disk, or a magnetic tape), a semiconductor medium (for example, a solid state disk (SSD)), or the like.

A readable storage medium is further provided in the embodiment of the present disclosure, configured to store the method provided in the above embodiments. For example, a random access memory (RAM), a flash memory, a read only memory (ROM), an EPROM memory, a non-volatile read-only memory (EPROM), a register, a hard disk, a removable disk, or any other form of storage medium in the art.

The expressions "first", "second" (if any) described in the embodiments of the present disclosure are used only for distinguish different names, rather than indicating the first or the second in a sequence.

It should be noted that the embodiments in the present disclosure are described in a progressive manner, and each of the embodiments focuses on its differences from the other embodiments. The same and similar parts among the embodiments may be referred to each other. Since the product disclosed in the embodiments corresponds to the method disclosed in the embodiments, the description of the method is relatively simple, and references may be made to the description of the product for relevant matters.

The disclosed embodiments are described above so that those skilled in the art can implement or use the present disclosure. Various modifications made to the embodiments are apparent to those skilled in the art. The general principle defined herein may be implemented in other embodiments without departing from the spirit and scope of the present disclosure. Therefore, the present disclosure should not be limited to the embodiments disclosed herein, but has the widest scope in accordance to the concept and the novel features disclosed herein.

## Claims

1. A resonant converter, comprising: a first resonant conversion circuit, a second resonant conversion circuit, a switching module, a discharging circuit, and a controller, **characterized in that**:
a positive electrode of the first resonant conversion circuit is connected to a first terminal of the discharging circuit, a negative electrode of the second resonant conversion circuit is connected to a second terminal of the discharging circuit, the first resonant conversion circuit is connected to the second resonant conversion circuit through the switching module, the positive electrode of the first resonant conversion circuit is configured as a positive output terminal of the resonant converter, and the negative electrode of the second resonant conversion circuit is configured as a negative output terminal of the resonant converter; and
the controller is configured to:
output a first control signal to the discharging circuit in a case that a load characteristic of the resonant converter is a purely resistive characteristic; and
output a second control signal to the discharging circuit in a case that the load characteristic of the resonant converter is a capacitance-voltage characteristic,
wherein the first control signal is configured for closing the discharging circuit, and the second control signal is configured for opening the discharging circuit.

2. The resonant converter according to claim 1, wherein the controller is further configured to:
obtain an output voltage variation trend of the resonant converter, wherein the output voltage variation trend is obtained based on a plurality of output voltages; the plurality of output voltages are obtained by periodically acquiring a voltage at an output end of the resonant converter; and the output voltage variation trend is for determining the load characteristic of the resonant converter.

3. The resonant converter according to claim 1, wherein the controller is further configured to:
obtain an equivalent capacitance value and an actual capacitance value corresponding to the resonant converter, wherein the actual capacitance value is obtained based on an average variation rate of a plurality of output voltages; the plurality of output voltages are obtained by periodically acquiring a voltage at an output end of the resonant converter; and the load characteristic of the resonant converter is obtained based on the equivalent capacitance value and the actual capacitance value.

4. The resonant converter according to claim 1, wherein the discharging circuit comprises a variable discharging resistor, and the first control signal is configured for controlling the variable discharging resistor in the discharging circuit to have a first resistance value, wherein the controller is further configured to:
output a third control signal, in a case that an output voltage of the resonant converter is less than or equal to a first voltage or a discharging duration of the discharging circuit is greater than a first duration, wherein the third control signal is configured for controlling the variable discharging resistor in the discharging circuit to have a second resistance value, and the second resistance value is less than the first resistance value.

5. The resonant converter according to claim 4, wherein the controller is further configured to:
output a fourth control signal, in a case that the output voltage of the resonant converter is less than or equal to a second voltage or the discharging duration is greater than a second duration, wherein the fourth control signal is configured for opening the discharging circuit, and the second voltage is less than the first voltage.

6. The resonant converter according to claim 1, wherein in a case that the discharging circuit is closed, the controller is further configured to:
output a fifth control signal, in a case that an output voltage of the resonant converter is less than or equal to a third voltage or a discharging duration of the discharging circuit is greater than a third duration, wherein the fifth control signal is configured for opening the discharging circuit.

7. The resonant converter according to claim 1, wherein the discharging circuit comprises a first switching device and a discharging resistor, and the first switching device is connected in series with the discharging resistor to form a branch, and the branch is connected between the positive output terminal and the negative output terminal of the resonant converter.

8. A method for controlling a resonant converter, comprising:
outputting a first control signal to a discharging circuit in a case that a load characteristic of the resonant converter is a purely resistive characteristic, wherein the first control signal is configured for closing the discharging circuit; and
outputting a second control signal to the discharging circuit in a case that the load characteristic of the resonant converter is a capacitance-voltage characteristic, wherein the second control signal is configured for opening the discharging circuit.

9. An inverter, comprising the resonant converter according to any one of claims 1 to 7.

10. A photovoltaic system, comprising a controller and the inverter according to claim 9.

11. A control apparatus, comprising a processor and a memory, wherein the processor is connected to the memory, the memory is configured to store programs, instructions, or codes, and the processor is configured to execute the programs, the instructions, or the codes in the memory to implement the method for controlling a resonant converter according to claim 8.

12. A computer-readable storage medium, storing a computer program, wherein the computer program is loaded by a processor to perform the method for controlling a resonant converter according to claim 8.
